# EUROPEAN PATENT APPLICATION

(11) **EP 1 582 404 A2**
(43) Date of publication of application: **05.10.2005**
(21) Application number: 05380058.7
(22) Date of filing: 01.04.2005
(51) Int. Cl.: B60P 1/43

(54) **Safety device for vehicle ramp**

(30) Priority: 02.04.2004 ES 200400820
(71) Applicant: Fine Access, S.L., 41016 Sevilla (ES)
(72) Inventor: Salazar Corcuera, Javier, 26509 Agoncillo (La Rioja) (ES)
(74) Representative: Carvajal y Urquijo, Isabel

(57) **Abstract**

A safety device for extracting vehicle access ramps, formed by two grooved supports (10 and 11) coupled one inside the other in the same direction. The walls of both supports are traversed by two shafts (12, 13) on which two freely rotatable wheels (14, 15) are assembled. One of the shafts (12) traverses the walls of the outer support (10) through oblong holes (16), such that the inner support (11) swivels on the second shaft (13) with respect to the outer support (10). The two supports are connected by means of a spring (19) constantly driving the inner support (11) towards a raised position with respect to the outer support (10).

## Description

The present invention refers to a safety device for extracting vehicle access ramps, particularly intended for being installed in ramps assembled on the vehicles themselves for facilitating access for people with reduced mobility.

Ramps of the type indicated are generally formed by a casing or box of general right prismatic configuration, small height, square or rectangular-plan form, which is open at one of its walls. Housed within this casing is a plate, hereinafter called step, which is extractable when the vehicle is stopped so as to aid people with mobility problems to get on or off. Housed within the casing is a mechanism responsible for extracting or retracting the step.

Ramps of this type are disclosed for example in Spanish patent numbers 9902102 and 200201337 of the same applicants.

Whatever the constitution of the ramp and the system or mechanism responsible for moving the step may be, there is a possibility that the ramp user or any other person can access the step while the operation for the extraction or retraction thereof is being carried out with the subsequent danger this may imply due to the risk of falling.

The object of the present invention is to solve the problem set forth by means of a device of simple constitution and reduced cost which can be easily incorporated to the vehicle access ramp, assuring the immobilization of the step when it is in the extraction or retraction phase, provided that a weight exceeding a preset value is placed on said step, said value being chosen such that the immobilization of the step is assured not only by the weight of an adult person but also by the weight of a child.

The device of the invention thus eliminates the risk of accidents due to a person accidentally treading on the step when the latter is in the extraction or retraction phase.

The device of the invention is formed by two grooved supports coupled one inside the other in the same direction, both supports being able to have a U-shaped profile or section, of side branches that are straight and perpendicular to the central branch. The walls of the two supports are perpendicularly traversed by first and second shafts which are located the same distance from the central branch of the grooved supports. Assembled on these two shafts are two freely rotatable wheels projecting with respect to the free longitudinal edge of the grooved supports. The first shaft traverses the walls of the outer support through respective oblong holes in an approximately vertical direction such that the inner support may swivel on the second shaft with respect to the outer support between an upper position in which the wheel assembled on the first shaft is located at a greater height than the wheel assembled on the second shaft, and a lower position in which the two wheels are approximately at the same height. The two supports are connected by means of a spring constantly driving the inner support towards its upper position.

The oblong holes of the walls of the outer support through which the first one of the shafts passes will be of a slightly arched design, with a center of curvature in the second shaft.

Two supports such as that described will preferably be arranged in each ramp close to the open wall through which the ramp can be extracted. The devices will be located such that if a weight exceeding the preset limit is placed on the ramp during the extraction or retraction phase thereof, said ramp will act on the safety device, sending the corresponding signal to the actuation mechanism for its immobilization.

The constitution and features of the device of the invention as well as the working thereof will be set forth below in greater detail with the aid of the attached drawings in which a non-limiting embodiment is shown.

In the drawings:
Figure 1 shows a perspective view of a vehicle access ramp, of a customary constitution, with the step extracted.
Figure 2 shows a partial longitudinal sectional view of the same ramp according to the II-II section line of Figure 1.
Figure 3 shows a side elevational view of the safety device of the invention.
Figure 4 shows a plan view of the same device.
Figure 5 shows a cross sectional view of the safety device taken along the V-V section line of Figure 3.
Figure 6 shows a view similar to that of Figure 2, with the step in the retracted position.
Figure 7 shows a view similar to that of Figure 6, with the step in the extraction or retraction phase.

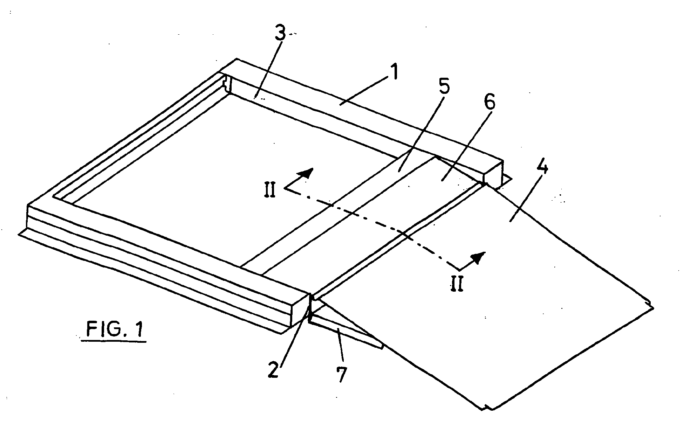

Figure 1 shows a vehicle access ramp, of a customary constitution, formed by a box or casing 1 of right prismatic configuration, rectangular-plan form, small height, which is open at one of its side walls 2 and partially at the upper base 3. Housed within this box or casing 1 is a step 4 that is extractable through the wall 2, as well as means for guiding the step 4 in its entrance and exit movements and an actuation mechanism responsible for causing such movements.

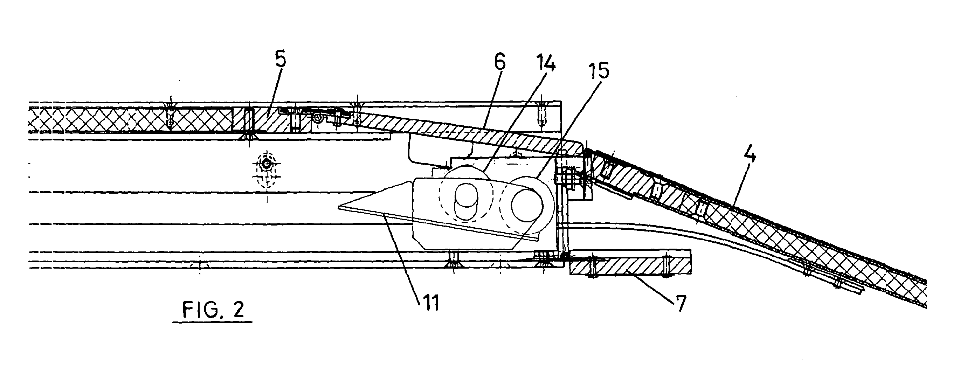

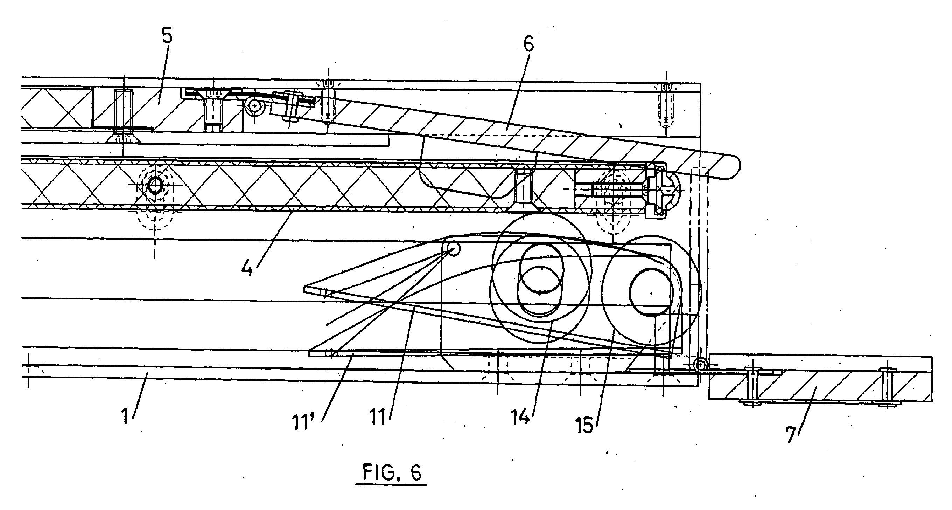

In the example shown in the figures, as can be seen in Figures 1 and 2, the upper base of the box has, close to the open wall 2, a fixed crossbar 5 to which a plate 6 is articulated which, in the extracted position of the step 4, occupies a tilted position almost in extension with that of said step, as can be seen in Figure 2, whereas when the step is fully retracted or housed in the box, as shown in Figure 6, it will be in a notably horizontal position upon lifting the gate 7 closing the open front wall of the casing, resting on the upper edge of said gate.

According to the invention, the walkway 1 includes a safety device by means of which the movement of the step 4 in its outward or inward movement is stopped if a weight having a magnitude exceeding a preset value is placed on said step.

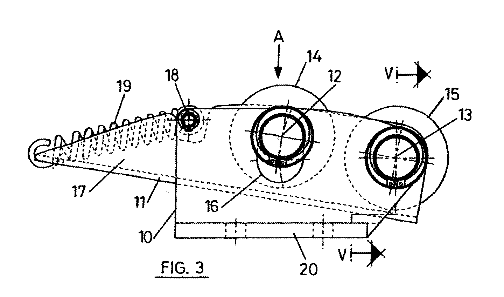

Said safety device is described in reference to Figures 3 to 5.

As can be seen this device is formed by two grooved structure supports coupled together one inside the other in the same direction, an outer one having reference number 10, and another inner one with reference number 11, both supports having in the example represented in the drawings a U-shaped cross section, the side branches of which are perpendicular to the central branch.

The side branches or walls of the two supports are perpendicularly traversed by the first shaft 12 and by a second shaft 13, both located an equal distance from the bottom of the inner support 11. Two freely rotatable wheels 14 and 15 are assembled on these shafts.

The shaft 12 traverses the walls of the outer support 10 through oblong holes 16 having a slightly arched trajectory with a center of curvature in shaft 13.

The support 11 projects through the side of the wheel 14 with respect to the support 10 in a portion 17, between the end of which support and a pin 18 assembled between the walls of support 10 a tension spring 19 is arranged which constantly drives the support 11 towards the position shown in Figure 3, in which the shaft 12 is moved towards the upper limit of the oblong holes 16.

If the wheel 14 is pressed in the direction of arrow A of Figure 3, the support 17 will swivel in a downward direction, about shaft 13, until the central branch or bottom of said support rests on the central branch or bottom of the support 10.

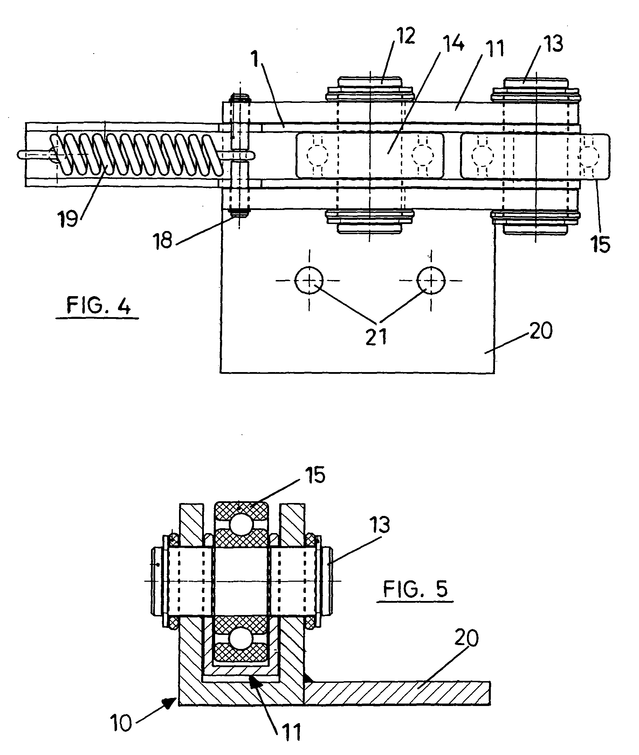

As can be seen in Figure 4, the central branch or bottom of the outer support 10 extends on one side into a longitudinal wing 20 provided with holes 21 for the fixing thereof inside the casing 1 of the ramp, as will be explained below.

As can be seen in Figures 2, 6 and 7, two devices such as those represented in Figures 3 to 5 are arranged on the bottom of the box 1, under the plate 6. The devices are fixed to the bottom of the box 1 by means of the wing 20, with the shafts 12 and 13 perpendicular to the direction of movement of the step 4.

As can be seen in Figure 2, when the step 4 is in the fully extracted position, the inner support 11 occupies the raised position, without the plate 6 resting on wheel 14. The inner support 11 occupies the same position when the step 4 is fully retracted or housed in the casing 1, as can be seen in Figure 6, a position in which the step 4 is approximately tangent to wheel 14.

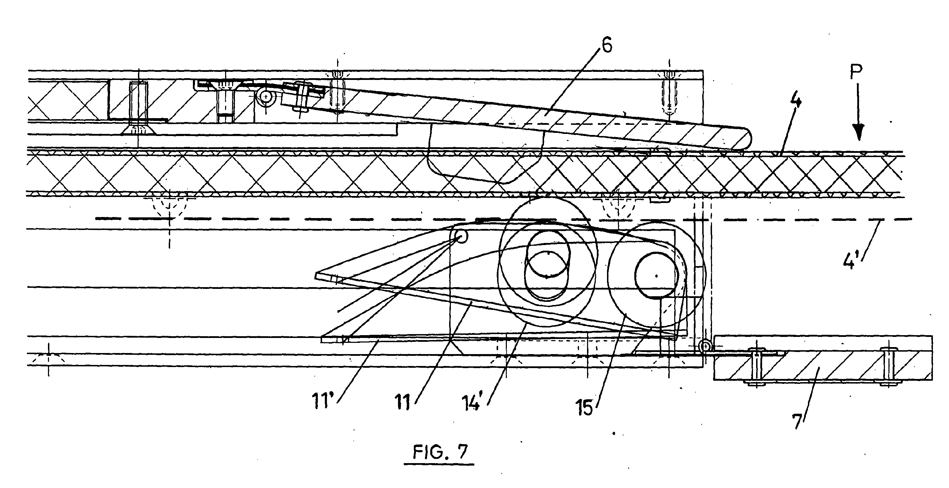

When the step 4 moves towards the interior or towards the exterior of the box 1, as shown in Figure 7, the support 11 can occupy its raised position, said step also being tangent to wheel 14, similar to Figure 6. However, when a weight W with a preset value acts on the step, said step swivels until occupying position 4', in which it pushes the wheel 14 in a downward direction until it occupies position 14', the support 11 being moved to position 11'. In this position, a circuit is closed by means of a contact or the like, immobilizing the actuation mechanism of the step 4, which thus remains stopped.

If the weight W corresponds to a person accidentally resting on the step 4 during movement, it will cause its immobilization, preventing the person from being able to fall. It thus has a safety catch against movement of the step when a weight equal to or greater than a pre-established value is placed on the step.

As soon as the weight W stops acting on the step 4, the latter recovers its original position and the spring 19 of the device of the invention will drive the support 11 towards its raised position.

## Claims

1. A safety device for extracting vehicle access ramps, **characterized in that** it comprises two grooved supports coupled one inside the other in the same direction, the walls of which are perpendicularly traversed by first and second shafts located the same distance from the bottom of the inner support, assembled on which shafts are two freely rotatable wheels projecting with respect to the free longitudinal edge of the walls of both supports, the first shaft traversing the walls of the outer support through respective oblong holes in a direction approximately perpendicular to the bottom of said support, the inner support swiveling on the second shaft with respect to the outer support between an upper position in which the wheel assembled on the first shaft is located at a greater height than the wheel assembled on the second shaft, and a lower position in which the two wheels are approximately the same distance from the bottom of the inner support, the two supports being connected by means of a spring constantly driving the inner support towards its upper position.

2. A device according to claim 1, **characterized in that** the oblong holes are of a slightly arched design, with a center of curvature in the second shaft.

3. A device according to claim 1, **characterized in that** the inner support projects longitudinally with respect to the outer support through the side adjacent to the first shaft in a portion, assembled between the end of the bottom of which support and a pin arranged between the walls of the outer support, close to the upper edge thereof, there is a tension spring constantly driving the inner support towards its upper position.

4. A device according to the previous claims, **characterized in that** the grooved supports are of rectangular section and the outer support has, from one of its walls and as an extension of the bottom, a longitudinal wing provided with holes for the passage of anchoring screws.
